# EUROPEAN PATENT APPLICATION

(11) **EP 0 844 603 A1**
(43) Date of publication of application: **27.05.1998**
(21) Application number: 98101435.0
(22) Date of filing: 07.12.1992
(51) Int. Cl.: G11B 5/72, G11B 5/82

(54) **A magnetic recording disk having an improved protective overcoat**

(30) Priority: 16.12.1991 US 808338
(62) Divisional of application: 92311134.8
(71) Applicant: INTERNATIONAL BUSINESS MACHINES CORPORATION, Armonk, NY 10504 (US)
(72) Inventor: Franco, Luis Padilla, Gilroy, California 95020 (US); Kaufman, James Harvey, San Jose, California 95112 (US); Metin, Serhat, San Francisco, California 94114 (US); Palmer, Danny Dean, Gilroy, California 95020 (US); Saperstein, David Dorn, Portola Valley, California 94028 (US); Wu, Anthony Wai, San Jose, California 95120 (US)
(74) Representative: Davies, Simon Robert

(57) **Abstract**

A thin film metal alloy magnetic recording disk has a protective nitrogen-containing carbon overcoat which is thinner and which exhibits better wear resistance, corrosion resistance, and hardness than conventional carbon overcoats without nitrogen. The nitrogen present in the disk overcoat substantially reduces the film stress. Because of the low stress of the overcoat film there is significantly less likelihood that the overcoat will delaminate, buckle, or otherwise wear away from the underlying magnetic layer during operation of the disk file. This allows for significantly reduced overcoat thickness, thus reducing the head-disk spacing in the disk file. The overcoat, even though significantly thinner than prior art carbon overcoats, exhibits better wear and corrosion resistance than carbon overcoats without nitrogen. In addition, when the carbon overcoat contains hydrogen, the presence of the nitrogen increases the hardness of the film if present in a specific amount dependent on the amount of hydrogen present.

## Description

This invention relates to a thin film metal alloy magnetic recording disk having a protective carbon overcoat which contains nitrogen.

In many types of rotating rigid disk files, each of the read/write transducers (or heads) is supported on a carrier (or slider) which rides on a cushion or bearing of air above the surface of its associated disk when the disk is rotating at its operating speed. The slider is connected to a linear or rotary actuator by means of a relatively fragile suspension. There may be a stack of disks in the disk file with the actuator supporting a number of sliders. The actuator moves the sliders radially so that each head may access the recording area of its associated disk surface.

In these conventional disk files the slider is biased towards the disk surface by a small force from the suspension. The slider is thus in contact with the disk surface from the time the disk file is turned on until the disk reaches a speed sufficient to cause the slider to ride on the air-bearing. The slider is again in contact with the disk surface when the disk file is turned off and the rotational speed of the disk falls below that necessary to create the air-bearing. In such contact start/stop (CSS) disk files a protective overcoat and a lubricant are often maintained on the disk surface to prevent damage to the head and the disk during starting and stopping of the disk.

In addition to the above-described conventional CSS magnetic recording disk files, rigid disk files have been proposed wherein the head-disk interface includes a liquid film as a liquid bearing between the transducer carrier and the disk. An example of this type of liquid-bearing interface disk file is described in assignee's pending application, U.S. Serial Number 264,604, filed October 31, 1988, and published May 9, 1990 as European published application EP 367510.

One type of disk for use in rigid disk files is a thin film metal alloy disk which typically comprises a substrate, such as an aluminium-magnesium (AlMg) alloy with a nickel-phosphorous (NiP) surface coating, a cobalt-based alloy, such as a CoPt or CoNi alloy, sputter deposited as the magnetic layer on the substrate, and a protective overcoat, such as a sputter-deposited amorphous carbon film, formed on the magnetic layer. In addition to the magnetic layer and the protective overcoat, thin film disks may also include a sputter-deposited underlayer, such as a layer of chromium (Cr), chromium-vanadium (CrV) or tungsten (W), between the substrate and the magnetic layer and a sputter deposited adhesion layer, such as a Cr, W or titanium (Ti) layer, between the magnetic layer and the protective overcoat.

Protective carbon overcoats for thin film metal alloy disks are well known. They are typically formed by sputter deposition from a graphite target, and are generally referred to merely as protective carbon overcoats, sputtered carbon overcoats, "diamondlike" carbon overcoats, amorphous carbon overcoats, or, in the case of those overcoats formed by sputter deposition in the presence of a hydrogen containing gas, hydrogenated carbon overcoats. Tsai, et al in "Structure and Properties of Sputtered Carbon Overcoats on Rigid Magnetic Media Disks," J. Vac Science Technology A6(4), July/August 1988, pp. 2307-2314, describe such protective carbon overcoats and refer to them as amorphous "diamondlike" carbon films, the "diamondlike" referring to their hardness rather than their crystalline structure. U.S. Pat. No. 4,503,125 discloses a protective overcoat of amorphous carbon formed by sputtering a graphite target. Protective disk overcoats of amorphous hydrogenated carbon films formed by reactive sputtering of a graphite target in an atmosphere of argon and hydrocarbon gases are described in Japanese Kokai No. 60-157725. Assignee's U.S. Pat. No. 4,778,582 describes a protective hydrogenated carbon overcoat formed by sputtering a graphite target in the presence of argon and hydrogen (H₂). The incorporation of hydrogen into amorphous carbon films increases the hardness and electrical resistivity of the films.

DE-A-3519383 discloses a magnetic recording medium having a thin layer of magnetic material which is protected by a protective layer of carbon nitride having a thickness of between 20 and 150 nm (200 and 1500 Angstroms). US 5069967 (which is related to US 4880687) discloses a recording disk having a magnetic layer and a protective overcoat including a protective carbon film and a plasma-polymerised film. The plasma-polymerised film preferably contains carbon and hydrogen, and optionally nitrogen, with a thickness between 0.3 and 30nm (3 and 300 Angstroms). US 4804590 discloses an abrasion resistant magnetic recording member having a carbonaceous protective film comprising a soft upper layer and a harder lower layer. The lower layer is formed of sputtered carbon or plasma enhanced chemical vapour deposition (PCVD) carbon, and the uppper layer is formed by PCVD and contains hydrogen and/or fluorine.

One of the problems associated with protective disk overcoats is that, due to their inherent thickness required for the wear and corrosion resistance of the underlying magnetic layer, the spacing between the head and the magnetic layer is necessarily increased. Since the strength of the signal required to write data onto the magnetic layer with the write head and the strength of the signal read back from the magnetic layer by the read head are directly proportional to the spacing between the head and the magnetic layer, it is desirable to minimise this spacing. The minimum thickness of protective amorphous carbon or amorphous hydrogenated carbon overcoats in commercially available magnetic recording disks is in the range of 20-25nm (200-250 Å). However, it has been found experimentally that the minimum film thickness before loss of protection occurs is in the range of approximately 12.5 nm (125 Å).

The chemical structure of amorphous carbon films doped with nitrogen has been studied by Kaufman, Metin and Saperstein in "Symmetry breaking in nitrogen-doped amorphous carbon: Infrared observations of the Raman-active G and D bands", Physical Review B, Third Series, Vol. 39, No. 18, 15 June 1989-II, pp. 13-053 to 13-060. Japanese published unexamined patent application JP 1048221 discloses a two-layer protective disk overcoat wherein the first layer is chromium nitride and the second or upper layer is a film formed by sputtering a carbon target in the presence of hydrogen and nitrogen. Neither of these references, which essentially describe the addition of nitrogen to an amorphous hydrogenated carbon film, suggests any property of the film which could allow the film to made thinner and yet still function as a protective disk overcoat.

What is needed is a thin film disk overcoat which provides both wear and corrosion resistance while minimising the spacing between the disk magnetic layer and the head.

According to the present invention there is now produced a thin film magnetic recording disk comprising a substrate, a magnetic alloy layer formed over the substrate, and a protective overcoat comprising carbon, hydrogen, and nitrogen, the carbon in the overcoat being in essentially amorphous form, said overcoat having a thickness of less than 20 nm (200 Angstroms), characterised in that a magnetic head may approach the magnetic alloy layer to within 20 nm (200 Angstroms).

In a specific embodiment of the present invention there is a thin film metal alloy magnetic recording disk having a protective carbon overcoat which contains nitrogen. The nitrogen present in the overcoat substantially reduces the film stress. Due to the low stress of the film there is significantly less likelihood that the overcoat will delaminate, buckle, or otherwise wear away from the underlying magnetic layer during operation of the disk file. This allows for significantly reduced overcoat thickness, thus reducing the head-disk spacing in the disk file. The overcoat, even though significantly thinner than prior art carbon overcoats, exhibits better wear and corrosion resistance than carbon overcoats without nitrogen. The presence of the nitrogen increases the hardness of the film if present within a range dependent on the amount of hydrogen added to the film.

For a fuller understanding of the nature and the advantages of the present invention, reference should be made to the following detailed description taken in conjunction with the accompanying drawings.
Fig. 1 is a graph of stress of nitrogen-containing hydrogenated carbon films as a function of the amount of nitrogen in the films, for films made by plasma CVD and by sputtering; and
Fig. 2 is graph of hardness of nitrogen-containing hydrogenated carbon films, for films containing different amounts of hydrogen.

The effect of nitrogen on the properties of amorphous hydrogenated carbon films used as protective disk overcoats was observed for overcoats made by both plasma enhanced chemical vapour deposition (CVD) and sputter deposition. In both processes, the nitrogen-containing hydrogenated carbon films were formed on thin film disks and on single crystal semiconductor grade silicon wafers and compared with comparable films formed without nitrogen. The thin film metal alloy magnetic disks onto which the overcoats were formed comprised an AlMg substrate with a NiP surface coating and a CoPtCr magnetic layer of approximately 30nm (300 Å) thickness.

For the plasma enhanced CVD process the deposition pressure was maintained at 0.8Pa (6 mTorr) and deposition of the hydrogenated carbon film was accomplished by introducing hydrocarbon gas (cyclo-pentane) into the plasma. Other hydrocarbon gases, e.g. methane, ethylene or benzene, could also be used. The partial pressure of the hydrocarbon gas was held at 0.07Pa (0.5 mTorr). The plasma was ignited using low frequency RF (300 KHz) at 400 watts. The substrates were biased at -300 volts DC. It has been determined experimentally that a substrate bias, in the range of approximately -200 to -600 volts DC, is important to achieve a film of sufficient hardness. A carrier gas with a one-to-one ratio of argon and nitrogen was utilised for the deposition of the nitrogen-containing hydrogenated carbon films. Deposition time was nominally 45 seconds. Total overcoat thickness was nominally 7.5nm (75 Å). Measurements made by Rutherford backscattering and forward recoil scattering (RBS) indicated that the nitrogen-containing hydrogenated carbon film formed by this plasma CVD process contained approximately 5 atomic percent (at.%) nitrogen and 25 at.% hydrogen. Films with varying amounts of hydrogen and nitrogen were made by varying the amount of hydrocarbon and nitrogen gases.

For the sputter deposition process, sputtering was accomplished by DC magnetron by use of a high-purity hard pressed graphite target using a DC source at 1.5 kilowatts. The substrates were biased at 650 watts with a low frequency power supply operating at 300 KHz. While the addition of substrate bias has been found experimentally to improve the wear resistance of the films, it is possible to make adequate films without the use of substrate bias. The carrier gas was argon plus 4 percent hydrogen for the disk overcoats formed without nitrogen, and argon with 4 percent hydrogen plus 50 percent nitrogen for the disk overcoats with nitrogen. Measurements made by RBS demonstrated that the nitrogen-containing hydrogenated carbon films contained about 14 at.% nitrogen and approximately 11 at.% hydrogen. The films made without added nitrogen contained approximately 20 at.% hydrogen and no detectable nitrogen. Films with varying amounts of hydrogen and nitrogen were made by varying the amount of hydrogen and nitrogen gases introduced into the sputtering chamber.

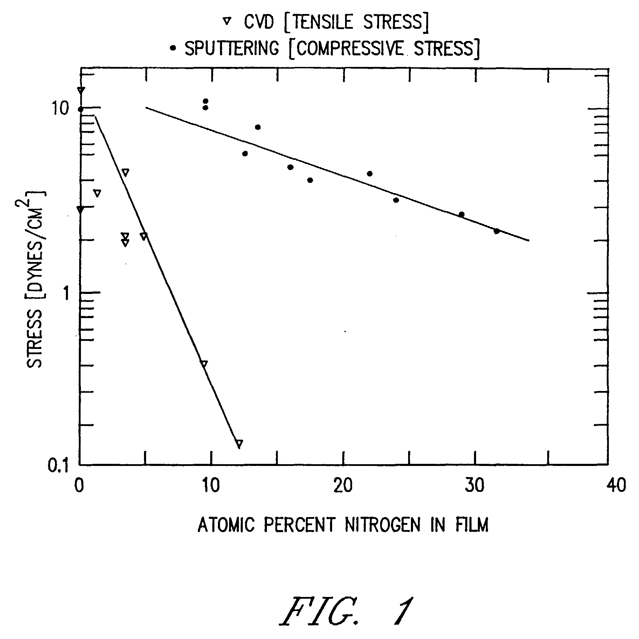

It was discovered that the nitrogen-containing hydrogenated carbon films made by the above described processes exhibited unusually low stress. This unexpected reduction in film stress as a function of the addition of nitrogen is illustrated graphically in Fig. 1 for films formed on silicon wafers by both processes. The internal stress of the films was measured with a wafer deflection gauge made by Ionic Systems. The films used for the stress measurement were formed to a nominal thickness of 200nm (2000 Å) on 76mm (3 inch) diameter silicon wafers. The wafers were then placed in the gauge with the film side facing away from the light sensor. The principle behind the stress measurement is that when the film is formed on the silicon wafer it will introduce an amount of deflection or bow to the wafer. The accurate measurement of this bow allows computation of the film's stress. From this total deflection the magnitude of the film stress can be determined. The stress of the film as a protective disk overcoat is directly related to its ability to adhere to the underlying magnetic layer on the thin film disk. It is desirable that the overcoat exhibit zero stress, which would indicate its maximum adhesion to the magnetic layer, and thus a low probability that it would delaminate, buckle, or otherwise wear away from the magnetic layer during operation of the disk file.

As a result of the discovery of the reduction in film stress caused by the addition of nitrogen, experiments were conducted to determine whether the thickness of the overcoat could be substantially reduced beyond that previously achievable without compromising its ability to provide adequate wear and corrosion resistance. The disks with the nitrogen-containing amorphous hydrogenated carbon films formed over the cobalt alloy magnetic layers were lubed with Z-DOL brand of perfluoropolyether from Montedison and then placed in a CSS tester and subjected to CSS cycles to determine when failure occurred. The nitrogen-containing carbon overcoats tested had a thickness of 7.5nm (75 Å) and withstood 42,000 CSS cycles. By comparison, when experimental overcoats of approximately the same thickness but without nitrogen were subjected to the same tests failure of the disks occurred at less than 15,000 CSS cycles. In addition, disks with the same 7.5nm (75 Å) thick nitrogen-containing carbon overcoats exhibited a surprising ten times better corrosion resistance than 20nm (200 Å) thick amorphous hydrogenated carbon overcoats without nitrogen.

Commercially available thin film metal alloy disks with carbon overcoats have a carbon overcoat thickness typically of approximately 20 to 25nm (200 to 250 Å). However, experimental CSS testing of hydrogenated carbon overcoats on CoPtCr magnetic layers at various overcoat thickness's has indicated that the minimal achievable thickness for use in a disk file is approximately 12.5nm (125 Å). The unexpected discovery of the reduction in film stress as a function of nitrogen concentration in nitrogen-containing hydrogenated carbon overcoats, as illustrated in Fig. 1, permits the overcoat to be made substantially thinner, thereby reducing the head-disk spacing in the disk file. Moreover, as is apparent from the above description, such substantially thinner disk overcoats unexpectedly provide better wear resistance and corrosion resistance than conventional hydrogenated carbon overcoats without nitrogen.

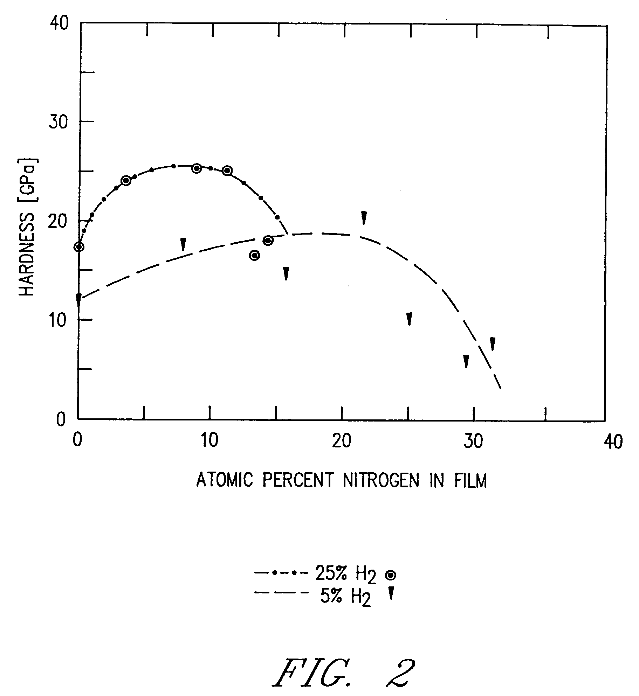

It is known that the addition of hydrogen to conventional amorphous carbon disk overcoats improves both the hardness and electrical resistivity of the overcoats. However, as illustrated in Fig. 2, it has been discovered that the addition of nitrogen to amorphous hydrogenated carbon films also increases the hardness of the films above that achievable with hydrogen alone, provided the nitrogen is present in a specific amount dependent upon the amount of hydrogen present in the overcoat. Thus, referring to Fig. 2 wherein hardness of the films is represented in gigapascals (GPa), the curve for the overcoat with 25 at.% hydrogen indicates that when nitrogen is present in an amount up to approximately 10 at.% the hardness of the overcoat is greater than if no nitrogen were present. Similarly, the curve for the overcoat with 5 at.% hydrogen indicates that the overcoat is made harder if nitrogen is present in an amount up to approximately 25 CTRL at.%. The data illustrated in Fig. 2 thus suggests some type of synergistic effect between the hydrogen and nitrogen in the overcoats.

As should be apparent by the above description and experimental data, the addition of nitrogen to amorphous hydrogenated carbon films enables protective overcoats to be formed for thin film disks to a thickness significantly below both the previously achievable commercially available film thickness of 20nm (200 Å) and the experimentally observed 12.5nm (125 Å) thickness. This is achievable as a result of the discovery of the significant film stress reduction caused by the addition of nitrogen, and the discovery that such thinner films provide greater wear resistance, corrosion resistance, and hardness than conventional hydrogenated carbon films.

While the preferred embodiments of the present invention have been illustrated in detail, it should be apparent that modifications and adaptations to those embodiments may occur to one skilled in the art without departing from the scope of the present invention as set forth in the following claims.

## Claims

1. A thin film magnetic recording disk comprising a substrate, a magnetic alloy layer formed over the substrate, and a protective overcoat comprising carbon, hydrogen, and nitrogen, the carbon in the overcoat being in essentially amorphous form, said overcoat having a thickness of less than 20nm (200 Angstroms), characterised in that a magnetic head may approach the magnetic alloy layer to within 20nm (200 Angstroms).

2. A disk as claimed in Claim 1 wherein the magnetic alloy is cobalt based.

3. A disk as claimed in any preceding Claim wherein the overcoat is formed directly on the magnetic layer.

4. A disk as claimed in any preceding Claim wherein the overcoat contains hydrogen in an amount between approximately 5 and 25 atomic percent.

5. A disk as claimed in any preceding Claim wherein the overcoat contains nitrogen in an amount less than approximately 25 atomic percent.

6. A disk as claimed in any of Claims 1 to 3 wherein the hydrogen is present in an amount less than approximately 25 percent and the nitrogen is present in an amount less than approximately 15 atomic percent.

7. A disk as claimed in any of Claims 1 to 3 wherein the hydrogen is present in an amount less than approximately 5 atomic percent and the nitrogen is present in an amount less than approximately 25 atomic percent.

8. A disk as claimed in any preceding Claim wherein the substrate is single crystal silicon.

9. A disk as claimed in any preceding Claim wherein the substrate is an aluminium alloy disk having an NiP surface coating.

10. A disk as claimed in any preceding Claim wherein the overcoat is sputter deposited.

11. A disk as claimed in any of Claims 1 to 9 wherein the overcoat is deposited by chemical vapour deposition.

12. A disk as claimed in any preceding Claim wherein the thickness of the overcoat is less than 12.5nm (125 Angstroms).

13. A disk as claimed in Claim 12 wherein the thickness of the overcoat is approximately 7.5nm (75 Angstroms).
